# EUROPEAN PATENT APPLICATION

(11) **EP 3 310 002 A1**
(43) Date of publication of application: **18.04.2018**
(21) Application number: 16193238.9
(22) Date of filing: 11.10.2016
(51) Int. Cl.: H04L 12/28, H04W 84/18

(54) **METHOD AND DEVICE FOR SETTING NETWORK-SPECIFIC VALUES FOR PARAMETERS IN A WIRELESS MESH NETWORK**

(71) Applicant: Helvar Oy Ab, 02150 Espoo (FI)
(72) Inventor: VESTERINEN, Matti, 02150 Espoo (FI); AHOLA, Jukka, 02150 Espoo (FI)
(74) Representative: Berggren Oy, Helsinki & Oulu

(57) **Abstract**

A method and devices are disclosed for setting network-specific values for parameters in a network node of a building automation system. A sequence of changes in mains power conforming with a first predefined pattern triggers preliminarily selecting a value for a parameter. During a first predefined period of time after said recognizing, the selected value of said parameter is transmitted repeatedly. Also during said first predefined period of time, values for said parameter transmitted from other network nodes are received. A received value for said parameter is compared to the selected value of said parameter. Any difference between the received value and the selected value is responded to by using that one of the received and selected values as a new selected value that satisfies a predetermined rule.

## Description

### FIELD OF THE INVENTION

The invention relates to setting parameter values that the nodes of a wireless building automation network must share. In particular the invention relates to setting such parameter values in a mesh network in which the nodes receive mains power through wired connections but communicate wirelessly with each other without predetermined master or slave roles.

### BACKGROUND OF THE INVENTION

Building automation has traditionally relied upon wired control, so that communications between the nodes of a building automation network has taken place through wired control buses. Replacing (or augmenting) wired control with wireless control involves many advantages, like faster deployment and versatility in forming the communication connections between nodes.

A lighting system can be considered as an example of a building automation network. Nodes of the lighting system may comprise luminaires, but also other devices such as sensors, switches, user interface devices, control units, and the like. A node may be a subsystem that involves some combination of such devices, like a luminaire equipped with a sensor. In order for a number of nodes to work together as a network, they must share at least some common parameter values such as one or more network identifiers that are unique in the sense that two different networks are prevented from having (or at least extremely unlikely to have) the same parameter value(s). Another example of a network-specific parameter is a security key that is required for wirelessly accessing nodes of the network with a remote controller, such as a portable communications device equipped with a control app.

We may consider a new office building under construction in which two neighbouring offices should each have their own, independently working lighting system. The devices that will act as nodes in these two networks come from the same manufacturer, and some logistic challenges could result if it was required that the manufacturer programmed them ready with the appropriate parameter values before delivery to the construction site. For the installing electrician it is most practical if the devices can be taken from the delivery containers and installed in whatever order is easiest, so that the network-specific parameter values that divide the installed devices into different networks are programmed only after the devices are in place. However, other kinds of difficulties may arise if the programming requires physical access to each device, because they may be located high in a ceiling or some other place where they are difficult to reach.

### SUMMARY OF THE INVENTION

It is an objective of the present invention to provide a network node of a building automation system that is capable of automatically agreeing upon network-specific parameter values with other nodes of the same network using wireless communications. Another objective of the invention is that said network node allows setting values for security parameters in a flexible way. Yet another objective of the invention is that the network node allows easy changes and modifications to the constitution of the network later.

The objectives of the invention are achieved by making the network node respond to a particular pattern of mains voltage switching by entering an arbitration mode for network-specific parameter values, and by making the arbitrating network nodes agree upon common parameter values in a heuristic way that does not require any of them to take the role of a master.

According to an aspect of the invention there is provided a network node of a building automation system. The characteristic features of the network node are listed in the independent claim directed to a network node.

According to another aspect of the invention there is provided a building automation system comprising at least one network node of the kind described above.

According to yet other embodiments of the invention there are provided a method and a computer program, the characteristic features of which are listed in the independent claims directed to a method and a computer program respectively. The computer program may be embodied on a volatile or a nonvolatile computer-readable record medium, for example as a computer program product comprising at least one computer readable non-transitory medium having program code stored thereon, the program code, which when executed by an apparatus, causes the apparatus at least to perform the operations described hereinbefore for the computer program in accordance with the respective aspect of the invention.

The exemplifying embodiments of the invention presented in this patent application are not to be interpreted to pose limitations to the applicability of the appended claims. The verb "to comprise" and its derivatives are used in this patent application as an open limitation that does not exclude the existence of features that are not recited. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF THE DRAWINGS

- Figure 1: illustrates functional blocks of a network node,
- figure 2: illustrates operation of a network node in the form of a flow diagram,
- figure 3: illustrates a method and a computer program,
- figure 4: illustrates another method and computer program,
- figure 5: illustrates another method and computer program,
- figure 6: illustrates another method and computer program, and
- figure 7: illustrates another method and computer program.

### DETAILED DESCRIPTION

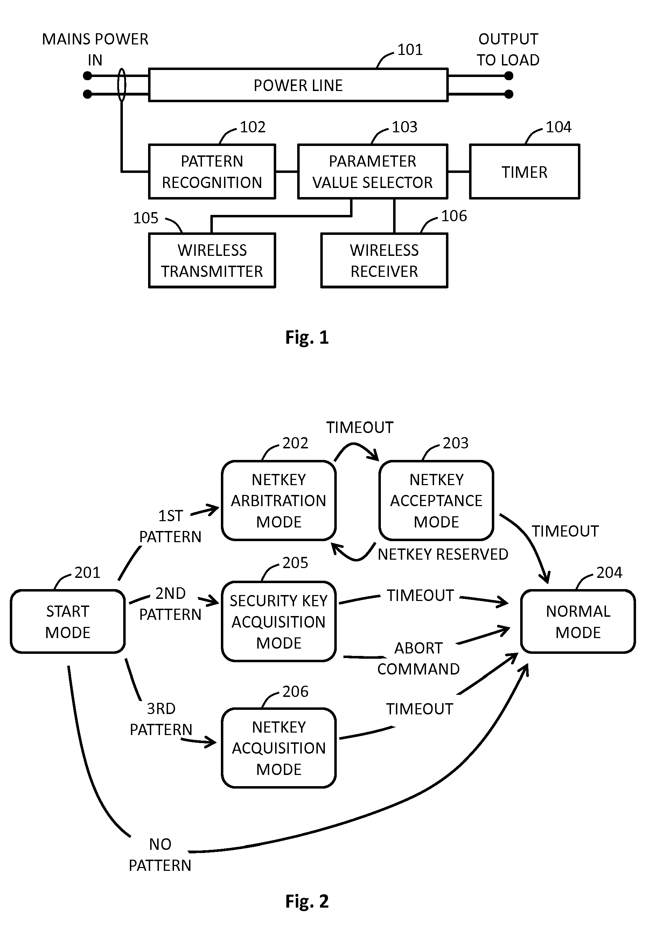

Fig. 1 is a schematic illustration of a network node of a building automation system. As an example we may assume that the node in fig. 1 is a driver device for light sources, an essential task of which is to convert the voltage of a mains power network (like 230 V 50 Hz AC) to a form that is suitable for the light sources and to control the amount of current delivered to the light sources. For this purpose the node comprise a so-called power line 101, which may comprise rectifiers, filters, switched-mode power supplies and other circuit elements as is well known in the art. Mains power comes in to the power line from the left in fig. 1, and controlled current is delivered to a load on the right. Similar arrangements where an intelligent device converts mains power into application-specific regulated voltage and/or current can be found in a variety of building automation applications.

Coupled to the power line, typically to or near that end of it at which mains power comes in, is a mains power pattern recognition unit 102. It is configured to respond to a sequence of changes in mains power conforming with a first predefined pattern by producing a first triggering signal. In other words, when the mains power that comes to the node behaves in a certain way, e.g. goes on and off a number of times with particular duration(s) of the on and/or off times, the mains power pattern recognition unit 102 notices this and reacts e.g. by raising a flag, i.e. setting a bit that signifies that said first predefined pattern was noticed. A mains power pattern recognition unit of this kind can be implemented e.g. as a combination of analogue and digital elements, of which the digital elements may include hardware logic and/or programmable digital circuits.

The first triggering signal acts as an input to a parameter value selector 103, which is capable of generating parameter values, storing generated and received parameter values, comparing parameter values with each other, and selecting parameter values for further use based on such comparing. The parameter value selector 103 is preferably implemented as a programmable process executed by a processor or microcontroller, and it comprises or has at its disposal - among others - a program memory configured to store the machine-readable instructions that constitute the basis of the method and computer program embodiments of the invention. The parameter value selector 103 is configured to respond to the first triggering signal produced by the mains power pattern recognition unit 102 by preliminarily selecting a value for a parameter. In the vocabulary of this description preliminarily selecting means that a value is selected but not yet necessarily used for its intended purpose: it may be subjected to some further processing like comparisons with other values, or it may be simply put on hold to wait for further use. The act of preliminarily selecting a value may comprise generating the value, for example by using a random number generator. The parameter value selector 103 has a timer 104 at its disposal for timing certain actions according to a program to be executed.

A wireless transmitter 105 is configured to repeatedly transmit, during a first predefined period of time after the first triggering signal came from the mains power pattern recognition unit 102, the selected value of said parameter. In this definition the selected value of said parameter is not necessarily the same as the initial, preliminarily selected value mentioned above; the definition means whatever value the parameter value selector 103 has as the currently selected one as long as the first predefined period of time has not expired yet. Later in this description we explain what kind of changes may occur to the selected value during said first predefined period of time. The timing aspects, i.e. the decision about how often the wireless transmitter 105 will transmit the selected value and the termination of these transmissions at the expiry of the first predefined period of time, may be on the responsibility of the parameter value selector 103, so that each transmission of the selected value of the parameter takes place upon an explicit transmitting order given by the parameter value selector 103. Alternatively (or additionally, in order to have redundancy) the wireless transmitter 105 may comprise independent timer functions, so that the parameter value selector 103 only informs it of the currently selected value of the parameter, after which it is on the responsibility of the wireless transmitter 105 to decide, how often it will transmit it and when to terminate the transmissions.

A wireless receiver 106 is configured to receive values for said parameter transmitted from other network nodes and to deliver such received values to the parameter value selector 103. Of interest in the following description are particularly values that the wireless receiver 106 receives during said first predefined period of time, because the parameter value selector 103 may compare these with the currently selected value of the parameter. Such comparing may be used for parameter value arbitration among nodes of the network: the aim is that during said first predefined period of time the network nodes agree upon a common, network-specific value for said parameter. The arbitration should proceed according to one or more predefined rules: the parameter value selector 103 is configured to compare, during the first predefined time, a received value for said parameter to the selected value of said parameter and to respond to any difference between the received value and the selected value by using that one of the received and selected values as a new selected value that satisfies the predetermined rule best. As a simple example the nodes of the network may aim at agreeing upon a value that is largest among all values that have been suggested for said parameter, so the comparison may be a simple comparison in magnitude, so that the larger of the compared values becomes the new selected value.

Using a sequence of changes in mains power to initiate the arbitration for a network-specific value for the parameter involves an advantage particularly in a building automation network. This is because even if the communications between nodes will take place wirelessly, mains power still comes wired and the practices of drawing the mains power cables favour tree-like structures, in which the cables that feed devices of particular kind within a particular area have a common root point. At the root point there are typically one or more switches, fuses, and/or circuit breakers of some other kind. As an example the mains power to all luminaires in an office may come through a centrally located switch or switch bank. Thus a pattern of switching the mains power on and off at said switch or switch bank delivers a simultaneous triggering signal to all luminaires of the whole office, while the luminaires of the neighbouring office (which are behind a different switch) do not get any similar triggering signal even in any accidental way, as might happen if the triggering signal was given through some wireless communication channel. This, together with suitable timing, can be used to ensure that all those nodes - but only those nodes - take part in the arbitration that are expected to belong to the network in question.

The fact that a pattern of switching the mains power on and off acts as a triggering signal involves an inherent assumption that each node comprises means for maintaining some functionality or at least some information even if its mains power is temporarily switched off. For this purpose the nodes may comprise some kind of temporary energy storage, like a battery or a large enough capacitor to maintain a minimum amount of stored information or to run a timer that measures the duration of the off-period. Another possibility is that the device stores some counter values or variable values to a non-volatile memory while the mains power is on, so that after a power-off period it can check the stored counter or variable values and use them to deduce the form of the ongoing or most recent pattern. Yet another possibility is that the nonvolatile memory is used to regularly record time stamps while the mains power is on, so that after a power-off period the sequence of previously stored time stamps reveals, whether the sequence of changes in mains power conforms with some predefined pattern.

As an example we will consider a lighting system in which the nodes are luminaires and/or intelligent driver devices capable of exchanging wireless messages. When first installed, the nodes are not aware of which other nodes are around and which of them should belong to the same network, i.e. which of them should share a common network ID, also called a netkey for short. However, they are all coupled to receive their mains power through tree-like mains power cabling, at the root of which is a switch. After the installation has proceeded to the stage where the nodes are in place and connected to mains power, the installing technician uses the switch at the root to perform a particular sequence of on-off-on switching. We assume that the sequence ends at the mains power being on, because that is the easiest way to ensure that each node has sufficient operating power available for the arbitration. This is not an essential requirement though, if the nodes have sufficient temporary energy storages available.

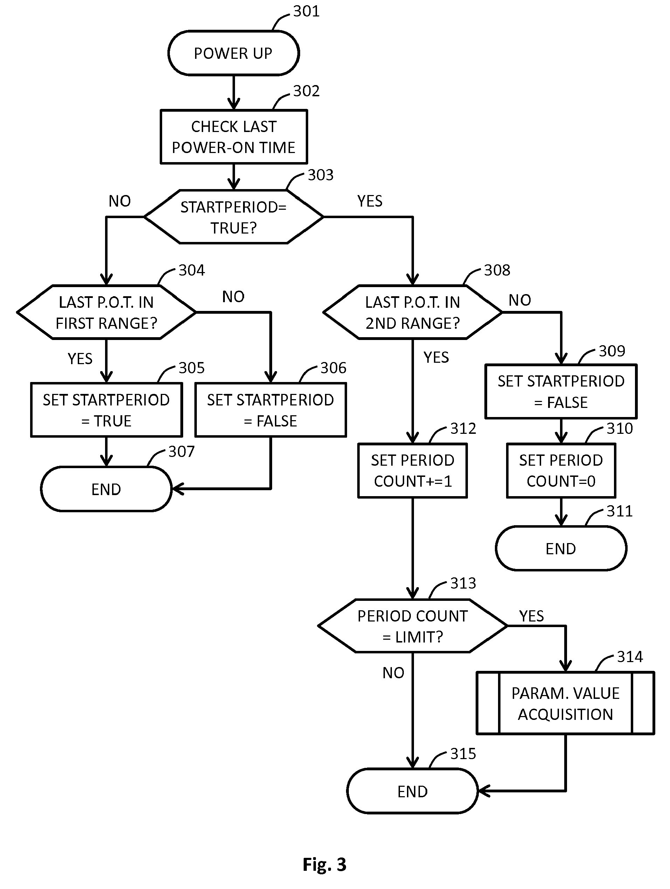

Operation of the network nodes follows the top part of fig. 2, where the start mode 201 corresponds to the initial mode in which the network nodes are when power is switched on (here in particular: when the sequence of on-off-on switching ends at the power remaining on). The mains power pattern recognition units of the nodes notice the completion of the sequence of on-off-on switching and produce the first triggering signal to their respective parameter value selectors, which in fig. 2 corresponds to going from the start mode 201 to the netkey arbitration mode 202. A more detailed example of a method that comprises recognizing a sequence of changes in mains power conforming with a first predefined pattern is shown in fig. 3.

Step 301 in fig. 3 shows that the method of fig. 3 begins executing every time when mains power comes on. Step 302 corresponds to reading from a nonvolatile memory the stored value of a numerical variable that tells, how long was the last power-on time. Step 303 corresponds to checking, again from a nonvolatile memory, whether the boolean variable StartPeriod has the value TRUE. A negative finding at step 303 results in proceeding to step 304, i.e. checking whether the last power-on time was within a first range. The first range should be selected so that it would be improbable that an unaware user would accidentally keep the mains power switched on for just such a time. The first range may be for example between 45 and 75 seconds. If the last power-on period was within the first range, the user may have intentionally given the first "character" of the first predetermined pattern, so the method comprises setting the value TRUE for the variable StartPeriod at step 305. If not, i.e. if the duration of the last power-on period was either too short or too long to fit in the first range, the method comprises setting the value FALSE for the variable StartPeriod at step 306. Both steps 305 and 306 lead to ending the execution of the method for the time being at step 307.

A positive finding at step 303 means that step 305 was executed last time when mains power was on, so the user may be proceeding to intentionally produce a sequence of changes in mains power that conforms with the first predefined pattern. Therefore the method comprises checking, at step 308, whether now the very last power-on time was within a second range. Again the second range should be selected so that accidentally hitting it would be improbable, but since the first hurdle has already been passed in the form of correctly hitting the first range, the requirement at step 308 may be somewhat looser. The second range may be for example between 5 and 25 seconds. A negative finding at step 308 means that the user is not proceeding to match the first predefined pattern after all, so the variable StartPeriod is given the value FALSE at step 309 and the value of another numerical variable PeriodCount is reset to zero at step 310 before ending execution at step 311.

A positive finding at step 308 means that already a second "character" of the first predefined pattern has been correctly given, which leads to increasing the value of the variable PeriodCount (stored in nonvolatile memory) at step 312 and examining, at step 313, whether the PeriodCount has reached a limit that indicates a complete match. If it has, the actual acquisition of the network-specific parameter value is initiated by producing the first triggering signal that commences step 314. If the PeriodCount had not yet reached the limit, the method simply ends at step 315 for the time being.

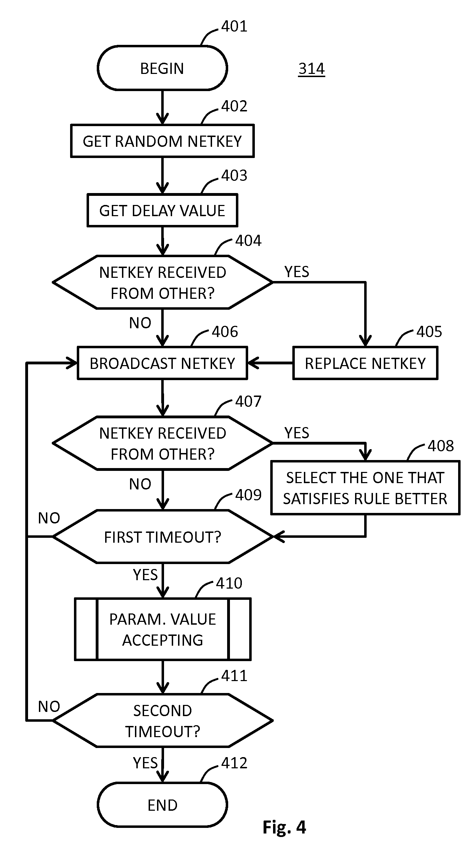

Fig. 4 illustrates an example of a method, the executing of which may begin in each node when the parameter value selector responds to the first triggering signal. Step 401 in fig. 4 represents beginning the execution, and step 402 represents generating a random value from a value space that has been predetermined in the structure and/or operating program of the parameter value selector. Generating the random value is one example of preliminarily selecting a value for the parameter (here: the network ID) in that node.

The network nodes begin to use their wireless transmitters to transmit their respective selected values for the network ID. If the transmission protocol requires using a working network ID in an address field to define the (group of) intended recipient(s), a factory-set default network ID can be used for this purpose so that the selected value of the network ID is placed in a payload part of the transmissions. In order to prevent transmission collisions it is advisable that the timer unit in each network node is configured to cause a delay between an occurrence of the first triggering signal and the beginning of said repeated transmitting of the selected value of said parameter. The length of the delay may be node-specific and fixed, or the node may comprise a random number generator for setting a random length for said delay. Getting and putting into operation such a delay value is represented by step 403 in fig. 4.

The wireless receiver in each node may continue to receive values from other nodes also during the delay: some other node may have a shorter delay and start the repeated transmissions already. Step 404 in fig. 4 represents examining, whether values for the parameter are received during the delay. The parameter value selector may respond to receiving a value for the network ID from another network node during said delay by setting such received value as the new selected value of said parameter, as at step 405. This can be done even without comparing to the preliminarily selected value, because obviously the received value has already begun spreading among the nodes; the total number of transmissions and value changes that will be required before all nodes agree upon the common value can be kept smaller by not beginning to transmit a - so far non-transmitted - different value even if it would satisfy the predetermined rule better.

After the delay has expired the node starts broadcasting its current network ID (either that preliminarily selected at step 402 or one received during the delay and used as a replacement at step 405) at step 406. During the remaining portion of the first predefined period of time each node applies repeatedly the practice of
- receiving values for the network ID transmitted from other nodes (step 407),
- comparing a received value for said parameter to their own selected value,
- responding to any difference between the received value and the selected value by using that one as the new selected value that a predetermined rule (i.e. replacing the selected value with the value received from another node it that value satisfies better the predefined rule but maintaining their own selected value otherwise; step 408), and
- transmitting the selected value.

Thus little by little the value that satisfies the predetermined rule best establishes itself as the selected value in all nodes that are in the netkey arbitration mode.

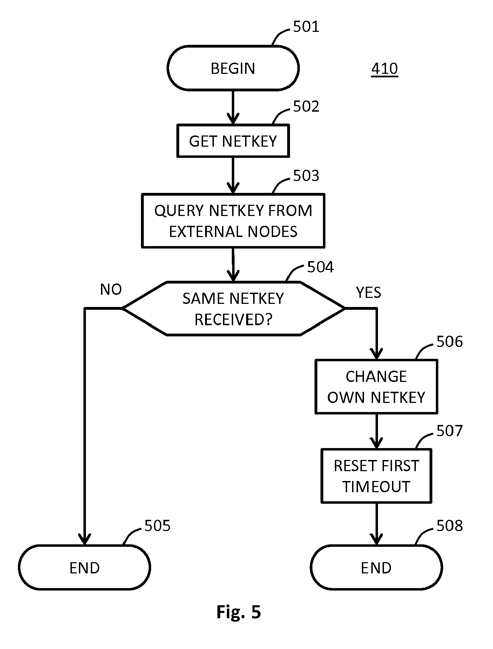

There is a small but finite possibility that the network ID value selected this way could accidentally become the same as the previously established network ID of a neighbouring network, i.e. the network ID value could be "reserved" already. If the value space from which the network IDs are selected is large enough the possibility may be so small that it can be accepted, and the rare cases where it actually occurred can be sorted out case by case. However, a small addition to the method described so far can easily eliminate even such a small possibility. This addition is called the netkey acceptance mode 203 in fig. 2, and it may take place during a later portion of the first predefined period of time. Since all nodes of the network began their netkey arbitration mode 202 simultaneously, a simple predefined timeout may be used to trigger the transition to the netkey acceptance mode 203. The length of the timeout may be in the order of several minutes, like 15 minutes for example. A check for the timeout is shown as step 409 in fig. 4, the method to be executed in the netkey acceptance mode is shown as step 410, and an example of the method is shown in more detail in fig. 5.

The method to be executed during the netkey acceptance mode begins at step 501 in fig. 5. The network ID value to be used is that selected during the netkey arbitration mode, as illustrated by step 502. At step 503 the wireless transmitter of each node is configured to repeatedly query the network ID (or, more generally: values for the parameter in question) from other network nodes that are currently not in a mode for selecting a network ID value (more generally: a value for said parameter). The query and/or response messages may be specially defined so that nodes that are themselves in the mode for selecting a network ID value know not to respond to a query, and/or the response message contains an indication of whether the node that sent it was in the mode for selecting a network ID value. The nodes that are currently not in the mode for selecting the network ID value are called "external" nodes in fig. 5. Comparison between the own, selected network ID value of the node and that received from an external node is shown as step 504 in fig. 5. If the values are not the same, the method of fig. 5 simply ends at step 505. The parameter value selector in each node is configured to respond to a matching value of said parameter received as a result of said querying by selecting a new value for said parameter that satisfies said predetermined rule better, as shown at step 506. So if, for example the response message came from a node of a neighbouring network and contained the same network ID, and if the predetermined rule is to select the larger value, the node that is in the netkey acceptance mode may increase its own selected value by one at step 506.

According to the vocabulary used in this description the netkey acceptance mode 203 takes place during a later portion of the first predefined period of time, so the practice is still going on where each node repeatedly transmits its own selected value, receives values transmitted by others, and selects the better-matching one of these two. This can be seen from the fact that a transition from step 411 back to step 406 occurs even if the method of step 5 (which takes place within step 410 of fig. 4) ended at step 505. A timeout may again be applied to trigger the transition from the netkey acceptance mode 203 to the normal mode 204 according to fig. 2. In order to eliminate even the smallest chance of network ID confusion between neighbouring networks this second timeout may be longer than the one used at step 409 of fig. 4 to trigger the beginning of the netkey acceptance mode. The second timeout may expire for example 60 minutes from the original beginning of the netkey arbitration mode. An alternative would be to observe a certain period of time during which no more changes have taken place to the selected value; such a period of time may be interpreted to show that agreement has been reached about the common value for the parameter in question.

As discussed above, the netkey acceptance mode may lead to the discovery that a neighbouring network had the same network ID and result in the own selected value being increased by one (or more generally: selecting a new value for said parameter that satisfies said predetermined rule better), as at step 506 in fig. 5. In order for this new selected value to have enough time to spread among the nodes and become the commonly agreed network ID in each node it may be advantageous to reset the timer that previously triggered the beginning of the netkey acceptance mode. Such resetting is shown as step 507 in fig. 5.

The practice of using a sequence of changes in mains power to trigger a process that establishes a common value for a parameter in all nodes of the network can be applied for arbitrary parameters, as long as the nodes are capable of recognising from the sequence which parameter is in question.

A special case of a parameter is a security key that is later required to remotely control the network node. A portable communications device equipped with a control app may be a very convenient way of controlling a building automation network such as a lighting system. However, unauthorized persons should be prevented from controlling the network. This can be accomplished by requiring the person using the control app to enter the value of a security key, also frequently referred to as a PIN (personal identification number), before access to any controlling functions is granted. The authorized user may wish to make contact with the network through any arbitrary node, so the value of the security key should be the same for them all.

The flow diagram of fig. 2 illustrates a security key acquisition mode 205, to which the nodes may go from the start mode 201 as a response to a sequence of changes in mains power conforming with a second predetermined pattern. Referring to fig. 1 this means that the mains power pattern recognition unit 102 is configured to respond to a sequence of changes in mains power conforming with a second predetermined pattern by producing a second triggering signal. Recognizing the sequence of changes according to the second predetermined pattern may proceed according to the method illustrated in fig. 3, wherein the differences to recognizing the sequence of changes according to the first predetermined pattern may be made by using a different first range at step 304, and/or a different second range at step 308, and/or a different limit at step 313.

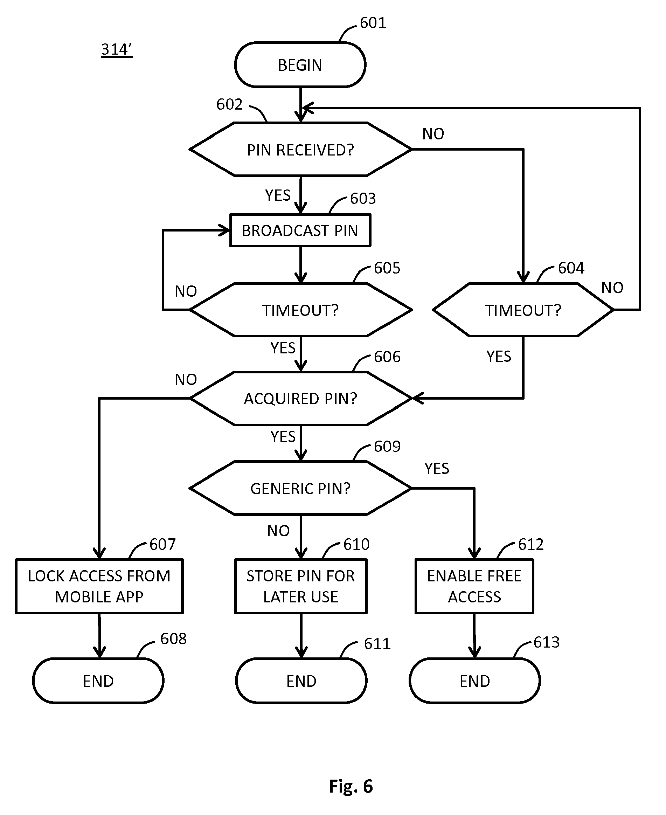

Fig. 6 illustrates an example of a method that can be executed at step 314 of fig. 3 if the aim is to find a value for a security key. In order to avoid confusion with fig. 4 the method of fig. 6 is labelled with the general label 314'. The execution begins at step 601. A difference between the security key acquisition mode and the netkey arbitration mode explained earlier is that in the latter the nodes may suggest and openly arbitrate about values they came up with by themselves for the network ID, while in the security key acquisition mode the value of the security key should come from the user, and a node is only allowed to start broadcasting it after having received it either directly from the remote controller or from another node. Therefore step 602 in fig. 6 involves a check, whether a value for the security code has been received. If yes it is broadcast at step 603, while not having received the security key value causes a transition to step 604 where the possible timeout is checked. A timeout checking step 605 follows also the broadcast step 603.

Mapping the method of fig. 6 against the functional blocks illustrated in fig. 1, the wireless receiver 106 of the node is configured to receive, during a second predefined period of time triggered by said second triggering signal, values for a security key from remote controllers or other network nodes. The parameter value selector 103 is configured to respond to receiving a value for said security key during said second predefined period by storing that received value as a security key that is later required to remotely control the network node, and the wireless transmitter 105 is configured to respond to receiving said value for said security key during said second predefined period by transmitting said value for said security key to other nodes of the network.

A positive finding at step 604 or 605 means that the time reserved for acquiring the value of the security code has expired. Step 606 is a check whether the node received any security key value. If not, all further access to the node is locked and the method ends according to steps 607 and 608 respectively; said parameter value selector is configured to respond to not receiving, during the second predefined period of time, any value for said security key by preventing later remote control of said network node by any remote controller. If a security key value was acquired, a further check follows at step 609 to find out, whether the value was a true security key value or whether it was a so-called generic key the purpose of which is to open the access to the nodes for all remote controllers with the control app, without requiring any particular PIN code. The nodes have been programmed to recognize one or more security key values as generic keys, and different generic keys may open different levels of general access. A true security key value is stored for further use at step 610 before ending execution at step 611, while the steps 612 and 613 in the rightmost case of fig. 6 mean that the parameter value selector of the node is configured to respond to receiving a generic security key during the second predefined period of time by allowing later remote control of said network node by any remote controller.

Security measures may be needed that limit openly transmitting the security key around, or at least the time may be limited during which an eavesdropping party could accidentally receive a valid value of the security key. One example of a security measure is shown schematically in fig. 2, where the transition from the security key acquisition mode 205 to the normal mode 204 may take place also as a result of an abort command received from the remote controller. Another example of a security measure is the use of encryption for the wireless transmissions. The network nodes may use known measures in their mutual communications to establish a so-called shared secret after they have agreed upon a network ID, and use that shared secret to derive the encryption and decryption keys that are used in at least those wireless transmissions that concern the value of a security key.

During the lifetime of a building automation system it may happen that a node must be replaced or new nodes must be added to an existing network that already has a network ID. In order to take part in the operation of the network a new node must know the correct network ID. A straightforward alternative would be to switch on the new node and let it receive wireless transmissions from its surroundings, so that the node would simply expect that the network ID in the (majority of) transmissions it receives is the one it should take into use. However, such a simple alternative involves the risk that a network node might be located near a border to a foreign network and receive (mostly) transmissions from there, in which case it would acquire the wrong network ID. Another possibility would be to use the combination of a netkey arbitration mode and netkey acceptance mode again, so the whole network would acquire a new network ID. However, such an alternative is kind of exaggeration and may waste communications bandwidth and useful on-time compared to the actual needs.

A solution according to an embodiment of the invention is to again use a sequence of changes in mains power, this time conforming with a third predefined pattern, to command not only the new node but also a sufficient number of other nodes in the appropriate network into a so-called netkey acquisition mode shown with the reference designator 206 in fig. 2. If all nodes of the network are behind a single mains power switch, that switch can be used to switch mains power on and off according to the third predefined pattern. It may suffice, though, to put only one or a few of those old nodes (as well as the new node) into the netkey acquisition mode that are closest to the new node, so if there are suitably distributed mains power switches, the rest of the network may be let to continue its operation normally. The role of the old, existing nodes in the netkey acquisition mode is to teach the new node(s) the existing network ID, while the role of the new node(s) is naturally to learn the existing network ID.

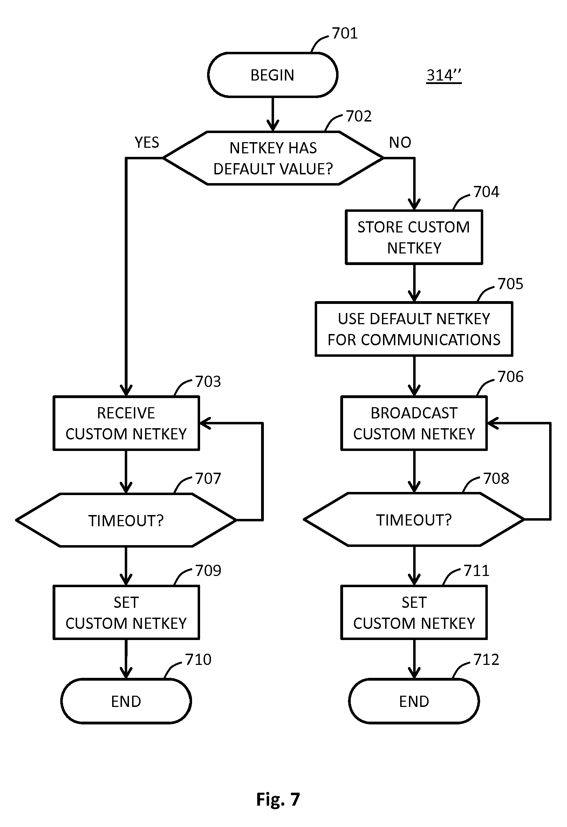

An example of a method to be executed in the netkey acquisition mode is shown in fig. 7. Since a sequence of changes in mains power conforming with another predefined pattern is used to trigger the execution of the method, the whole of fig. 7 may be considered included in step 314 of fig. 3; in order not to confuse with figs. 4 and 6 the general reference designator 314" is used in fig. 7. Specific ranges at steps 304 and 308, as well as a specific limit at step 313, can be used to define the form of the third predefined pattern. The execution begins at step 701, at which the node examines, whether it's currently stored network ID is equal to a default value that was set by the manufacturer or distributor prior to installation. A positive finding at step 702 means that the node is new, so it must learn the existing network ID of the network to which it is being added. Therefore fig. 7 shows a transition to step 703, where the node starts receiving wireless messages to learn the existing network ID (called the custom netkey in fig. 7).

A negative finding at step 702 means that the node is not new but an established and existing node in the network, so it has taken part in a network ID arbitration and acceptance procedure before and has the working, unique network ID at its disposal. In fig. 7 it is assumed, however, that in order to correctly address wireless transmissions that are broadcast to all nodes in range, the network ID must be used in an address field of the transmissions. The default value of the network ID must be used to talk to any new nodes, because the default value is all they know. Therefore the negative finding at step 702 leads to temporarily replacing the existing network ID and reverting back to the default value at steps 704 and 705. When the existing node starts broadcasting the actual network ID at step 706, it uses the default value of the network ID in the address field(s) of its transmission(s).

The new node continues to receive and the existing nodes continue to broadcast the network ID for a third predefined period of time after entering the netkey acquisition mode, as illustrated by steps 707 and 708 in fig. 7 respectively. A relatively short period of time may suffice, at least if there is only one or only few new nodes. The third predefined period of time may be in the order of minutes or some tens of minutes: an exemplary value is 15 minutes. Mapping steps 702 to 708 against the functional block diagram of fig. 1 means that
- the mains power pattern recognition unit 102 is configured to respond to a sequence of changes in mains power conforming with a third predetermined pattern by producing a third triggering signal,
- the parameter value selector 103 is configured to respond to said third triggering signal by comparing a stored value for a parameter to a default value of said parameter,
- the wireless transmitter 105 is configured to repeatedly transmit, as a result of said comparing showing a difference between the stored and default values, the stored value of said parameter during a third predefined period of time after said third triggering signal, and
- the wireless receiver 106 is configured to receive, as a result of said comparing showing no difference between the stored and default values, values for said parameter transmitted from other network nodes during said third predefined period of time.

When the third predefined period of time expires in the new node it stores the "custom netkey" or unique network ID it has received for further use at step 709 and ends the method at step 710. Correspondingly at step 711 the existing network node reads the network ID value it stored earlier at step 704 and sets it back into use as the network ID to be used in addressing wireless transmissions, before ending the method at step 712.

A building automation system according to an embodiment of the invention comprises at least one node of the kind described above. Although a single node cannot do much alone in the sense of arbitrating about a value of a network-specific parameter, even a network with only one node of the kind described above already contains the built-in capability of accepting the addition of further nodes of the same kind. Therefore the system only needs to comprise a minimum of one node of the kind described above to fulfil the characterization of a system according to an embodiment of the invention.

Changes and modifications can be made to the exemplary embodiments described above without departing from the scope of protection defined by the appended claims. For example, the method shown in the majority of fig. 3 is not the only possible method of recognizing a sequence of changes in mains power that conforms with a predefined pattern. An alternative way is e.g. to use a standard timer that is capable of running for a short time, say 1 minute, even without mains power on and that starts counting at the first power-on after any off-period that was longer than the expiry time of the timer. Recognizing a pattern could then be equal to counting how many times the user switches the power off and back on before the timer expires.

## Claims

1. A network node of a building automation system, comprising:
- a mains power pattern recognition unit configured to respond to a sequence of changes in mains power conforming with a first predefined pattern by producing a first triggering signal,
- a parameter value selector configured to respond to said first triggering signal by preliminarily selecting a value for a parameter,
- a wireless transmitter configured to repeatedly transmit, during a first predefined period of time after said first triggering signal, the selected value of said parameter, and
- a wireless receiver configured to receive, during said first predefined period of time, values for said parameter transmitted from other network nodes;
wherein the parameter value selector is configured to compare, during said first predefined time, a received value for said parameter to the selected value of said parameter and to respond to any difference between the received value and the selected value by using that one of the received and selected values as a new selected value that satisfies a predetermined rule.

2. A network node according to claim 1, comprising:
- a timer unit configured to cause a delay between an occurrence of said first triggering signal and the beginning of said repeated transmitting of the selected value of said parameter.

3. A network node according to claim 2, comprising a random number generator for setting a random length for said delay.

4. A network node according to any of claims 2 or 3, wherein said parameter value selector is configured to respond to receiving a value for said parameter from another network node during said delay by setting such received value as the new selected value of said parameter.

5. A network node according to any of the preceding claims, wherein:
- said wireless transmitter is configured to repeatedly query, during a later portion of said first predefined period of time, values for said parameter from other network nodes that are currently not in a mode for selecting a value for said parameter, and
- said parameter value selector is configured to respond to a matching value of said parameter received as a result of said querying by selecting a new value for said parameter that satisfies said predetermined rule better.

6. A network node according to any of the preceding claims, wherein:
- said mains power pattern recognition unit is configured to respond to a sequence of changes in mains power conforming with a second predetermined pattern by producing a second triggering signal,
- said wireless receiver is configured to receive, during a second predefined period of time triggered by said second triggering signal, values for a security key from remote controllers or other network nodes,
- said parameter value selector is configured to respond to receiving a value for said security key during said second predefined period by storing that received value as a security key that is later required to remotely control the network node, and
- said wireless transmitter is configured to respond to receiving said value for said security key during said second predefined period by transmitting said value for said security key to other nodes of the network.

7. A network node according to claim 6, wherein said parameter value selector is configured to respond to not receiving, during the second predefined period of time, any value for said security key by preventing later remote control of said network node by any remote controller.

8. A network node according to any of claims 6 or 7, wherein said parameter value selector is configured to respond to receiving a generic security key during the second predefined period of time by allowing later remote control of said network node by any remote controller.

9. A network node according to any of the preceding claims, wherein:
- said mains power pattern recognition unit is configured to respond to a sequence of changes in mains power conforming with a third predetermined pattern by producing a third triggering signal,
- said parameter value selector is configured to respond to said third triggering signal by comparing a stored value for a parameter to a default value of said parameter,
- said wireless transmitter is configured to repeatedly transmit, as a result of said comparing showing a difference between the stored and default values, the stored value of said parameter during a third predefined period of time after said third triggering signal, and
- said wireless receiver is configured to receive, as a result of said comparing showing no difference between the stored and default values, values for said parameter transmitted from other network nodes during said third predefined period of time.

10. A building automation system comprising at least one node according to any of claims 1 to 9.

11. A method for setting network-specific values for parameters in a network node of a building automation system, comprising:
- recognizing a sequence of changes in mains power conforming with a first predefined pattern,
- preliminarily selecting a value for a parameter,
- repeatedly transmitting, during a first predefined period of time after said recognizing, the selected value of said parameter,
- receiving, during said first predefined period of time, values for said parameter transmitted from other network nodes,
- comparing, during said first predefined time, a received value for said parameter to the selected value of said parameter and responding to any difference between the received value and the selected value by using that one of the received and selected values as a new selected value that satisfies a predetermined rule.

12. A method according to claim 11, comprising:
- repeatedly querying, during a later portion of said first predefined period of time, values for said parameter from other network nodes that are currently not in a mode for selecting a value for said parameter, and
- responding to a matching value of said parameter received as a result of said querying by selecting a new value for said parameter that satisfies said predetermined rule better.

13. A method according to any of claims 11 or 12, comprising:
- recognizing a sequence of changes in mains power conforming with a second predetermined pattern,
- receiving, during a second predefined period of time after recognizing said sequence of changes in mains power conforming with the second predetermined pattern, values for a security key from remote controllers or other network nodes, and
- responding to receiving a value for said security key during said second predefined period by storing that received value as a security key that is later required to remotely control the network node and transmitting said value for said security key to other nodes of the network.

14. A method according to any of claims 11 to 13, comprising:
- recognizing a sequence of changes in mains power conforming with a third predetermined pattern and comparing a stored value for a parameter to a default value of said parameter,
- if said comparing shows a difference between the stored and default values, repeatedly transmitting the stored value of said parameter during a third predefined period of time after said recognizing of a sequence of changes in mains power conforming with a third predetermined pattern, and
- if said comparing shows no difference between the stored and default values, receiving values for said parameter transmitted from other network nodes during said third predefined period of time.

15. A computer program comprising one or more sets of machine-readable instructions that, when executed by one or more processors of a building automation system, are configured to cause:
- recognizing a sequence of changes in mains power conforming with a first predefined pattern,
- preliminarily selecting a value for a parameter,
- repeatedly transmitting, during a first predefined period of time after said recognizing, the selected value of said parameter,
- receiving, during said first predefined period of time, values for said parameter transmitted from other network nodes,
- comparing, during said first predefined time, a received value for said parameter to the selected value of said parameter and responding to any difference between the received value and the selected value by using that one of the received and selected values as a new selected value that satisfies a predetermined rule.
